# EUROPEAN PATENT SPECIFICATION

(11) **EP 1 772 960 B1**
(45) Date of publication and mention of the grant of the patent: **04.03.2009**
(21) Application number: 05109356.5
(22) Date of filing: 07.10.2005
(51) Int. Cl.: H02P 29/02

(54) **Load monitor**
Lastüberwachung
Contrôle de charge

(43) Date of publication of application: 11.04.2007
(73) Proprietor: Emotron AB, 250 24 Helsingborg (SE)
(72) Inventor: Sparrenbom, Niklas, SE-246 57, Barsebäck (SE); Bojrup, Martin, SE-257 30, RYDEBÄCK (SE); Jönsson, Tom, SE-254 44, Helsingborg (SE)
(74) Representative: Johansson, Magnus

(56) References cited:
- WO-A-99/25049
- US-A- 5 720 231

## Description

### Technical Field of the Invention

The present invention relates generally to a load monitor or load indicator for a motor. More specifically, the invention also relates to methods for initiating monitoring and for monitoring the load of a motor and to a frequency converter for driving a motor and including a load monitor. Such a load monitor is disclosed in US 6 414 455.

### Background of the Invention

Load monitors are often used for protecting electrical motor systems from underload and overload. Load monitors in fixed frequency applications, such as mains connected or soft starter driven motors, are fully described by a normal load parameter and margins to define under-/overload conditions from this normal load. Basically this is how stand alone load monitors or load monitors included in motor drive systems works.

In WO 99/25049 A1, a load monitor for an electric motor is disclosed. This load monitor calculates, by a command from a user when the motor is running normally, the limits for under-/overload from the actual load. Then, during normal operation, the current motor load is repeatedly determined and compared with the calculated load limits. This load monitor is advantageous in relation to earlier load monitors in that the presetting of the load limit is relatively swift and easy.

US 5,720,231 discloses a method for monitoring the operating conditions of an induced draft fan electric motor of a gas furnace system. The system has a microprocessor to control the speed of the electric motor to ensure that adequate back pressure and flow rate for safe and efficient furnace operation exist. Readings of parameters proportional to speed and torque are taken over a selected range of back pressures and stored, and one minimum and one maximum value of acceptable back pressures are selected. Then, on a continuous basis during normal operation of the induced draft fan electric motor, readings of actual operating values proportional to speed and torque are taken and compared with the stored parameters at the minimum and maximum values of acceptable back pressures. If the actual operating values are outside the range limited by the minimum value and maximum value, the system is deenergized.

Even though the above mentioned methods of load monitoring works perfectly well in applications such as the one exemplified above, there are other applications in which the above methods of load monitoring are not satisfying, e.g. in varying speed applications. The problem is that operational disturbances are not always detected by the load monitor even though maximum and minimum load limits are set based on the actual load. As an example, in a pump application an operational disturbance may be caused by a damaged pipe, e.g. a hole in a pipe or a broken pipe, resulting in decreasing pressure in the pipes and thus the load on the motor is decreased. Another cause of operational disturbance may be the presence of none desired objects in the pipe, these may result in increased pressure and thus the load on the motor is increased.

US 5,621,289 describes a method for operating a transfer device in a press. The torque value of a servo is measured during operation of the press and is compared to a torque pattern, established under normal operation. If the torque value is outside a stored torque allowance, a malfunction is detected.

### Summary of the Invention

An object of the present invention is to provide an improved load monitor and method for initiating monitoring and for monitoring the load of a motor.

A particular object of the invention is to provide a load monitor and corresponding methods which solve the above mentioned problem with failing detection of operational disturbances.

This and other objects are achieved by the provision of a method for monitoring the load of a motor according to claim 1, a method for initiating monitoring and for monitoring the load of a motor according to claim 13, a load monitor for monitoring the load of a motor according to claim 15, and a frequency converter including a load monitor according to claim 19. Preferred embodiments of the present invention are defined in the dependent claims.

More specifically, a method according to the present invention for monitoring the load of a motor comprises the acts of repeatedly measuring the torque and registering the speed during normal operation, determining, in connection with each measurement of the torque during normal operation, a load limit value valid for the registered speed, the load limit value being a function of a plurality of stored torques and speeds and a predetermined deviation value, and comparing, in connection with each measurement of the torque during normal operation, the measured torque with the determined load limit value. If the measured torque is not within an acceptable range limited by the determined load limit value, then an appropriate action is taken.

As defined herein, "normal operation" means the operation of the motor when the motor is running during a process of application. During normal operation, operational disturbances may occur, and hence the load of the motor may vary due to the disturbances.

As mentioned above, a particular object of the invention is to provide a load monitor and corresponding methods which solve the problem with failing detection of operational disturbances. This problem often arises in variable speed applications. However, both of the examples from prior art above works perfectly well in many applications in which the speed of the motor varies. As seen above, the application disclosed in US 5,720,231, with an induced draft fan electric motor of a gas furnace system, is a typical variable speed application, where the speed and torque of the motor vary depending on the present back pressure of the gas furnace system. The main difference between applications in which the above prior art solutions of load monitoring works well and applications in which they do not lies in to what extent the load, i.e. torque, of the motor is depending on the motor speed. If "normal load" at one speed differs more than marginally from "normal load" at another speed and this difference is due to the speed itself and not some other external parameter, the above mentioned prior art methods of load monitoring can then only protect the system at the end points of operation, i.e. overload at high speed and underload at low speed. Some operational disturbances which occur when the motor is running at an intermediate speed will then remain undetected. For example, it is possible that operational disturbances are not detected when, for instance, the pump is driven at relative low speed, because the load resulting from the disturbance may be less than an acceptable high load at a higher speed or it may be higher than an acceptable low load at a lower speed. The present invention solves this problem by providing a load limit value which is valid for a present registered speed and which is a function of a plurality of stored torques and speeds and a predetermined deviation value. Hence, at any speed, at least within a normal speed range of operation, there will be a specific load limit value which is determined from a function of a plurality of stored torques and speeds and a predetermined deviation value. If the stored torques varies with the speed, then the resulting load limit value will also vary with the speed. Hence, the load limit value will at each speed be set in relation to a true normal torque, and therefore operational disturbances occurring at intermediate speeds will be detected.

According to one embodiment of the present invention, the method further comprises the act of automatically collecting said plurality of stored torques and speeds during an initiating sequence. Thereby, the collection of the plurality of torques and speeds becomes swift, easy and flexible, as compared to for example collection of the torque and speed parameters by manually stepping up the motor speed, measuring the torque and registering the speed.

According to another embodiment of the invention, the act of automatically collecting comprises the acts of setting a first speed for the motor, measuring, after the act of setting a first speed, a torque of the motor, storing the measured torque and the value of the corresponding speed in a memory, setting a second speed for the motor after storing the previously measured torque and the value of the corresponding speed, and repeating the acts of measuring and storing for the new speed.

Preferably, the method further comprises, between said act of setting during the initiating sequence a first speed for the motor and said act of measuring a torque of the motor, the act of waiting until an equilibrium state of the motor torque at said first speed is reached.

In another embodiment of the invention, said act of determining comprises the act of computing, in connection with each measurement of the torque during normal operation, the load limit value as the function of a plurality of stored torques and speeds and a predetermined deviation value. Hence, each time a measurement of the torque is made during normal operation, the load limit value valid for the registered speed is computed. Thereby, memory space and time for memory reading is saved, since no plurality of predetermined load limit values have to be stored, but only the plurality of stored torques and speeds and the predetermined deviation value.

In another embodiment, said act of computing further includes the act of interpolating between said stored torques and speeds in order to provide the load limit value at the registered speed if the registered speed does not correspond to any one of the stored speeds.

In an another embodiment, which is an alternative to the one of computing the load limit value in connection with each measurement of the torque during normal operation, the method further comprises the acts of computing a plurality of load limit values as functions of said plurality of stored torques and speeds and the predetermined deviation value during an initiating sequence before said normal operation, and storing the computed load limit values during said initiating sequence. Instead of saving memory space, computing power may be saved in this embodiment, which may be advantageous for some applications.

In another embodiment, the act of computing further includes the act of interpolating between said stored torques and speeds in order to provide further load limit values in the case the registered speed will not correspond to any one of the stored speeds.

According to another embodiment of the invention, said act of determining includes both the act of determining a maximum load limit value and the act of determining a minimum load limit value, wherein said act of comparing includes both the act of comparing the measured torque with the determined maximum load limit value and the act of comparing the measured torque with the determined minimum load limit value, and wherein said acceptable range is between and limited by the maximum load limit value and the minimum load limit value. Thereby, both overload and underload may be detected.

According to yet another embodiment of the invention, said act of determining includes both the act of determining said load limit value and the act of determining a warning limit value being a function of said plurality of stored torques and speeds and a predetermined warning deviation value which is smaller than said deviation value for said load limit value, and wherein said act of comparing includes both the act of comparing the measured torque with the determined load limit value and the act of comparing the measured torque with the determined warning limit value. By providing a warning limit value, different actions may be taken depending on how critical the overload/underload is.

In another embodiment, said predetermined deviation value is in the form that it yields said load limit value when multiplied by a function of said plurality of stored torques and speeds. In an alternative embodiment, said predetermined deviation value is in the form that it yields said load limit value when added to a function of said plurality of stored torques and speeds. The choice of form of the predetermined deviation value may depend on the application.

According to another aspect of the present invention, a method for initiating monitoring and for monitoring the load of a motor comprises the acts of: entering initiating sequence, setting, during the initiating sequence, a first speed for the motor, measuring, after the act of setting a first speed, a torque of the motor, storing the measured torque and the value of the corresponding speed in a memory, setting a second speed for the motor after storing the previously measured torque and the value of the corresponding speed, repeating the acts of measuring and storing for the new speed, shifting to normal operation when initiating sequence is completed, and monitoring a present torque of the motor at a present speed during the normal operation and relating the present torque to the torques and corresponding speeds stored during the initiating sequence in order to decide whether or not the present torque at the present speed is within an acceptable torque range.

According to yet another aspect of the present invention, a load monitor for monitoring the load of a motor comprises a Central Processing Unit (CPU), means for automatically and repeatedly generating a signal for changing the speed of the motor during an initiating sequence, an input for a signal representing the torque, an input for a signal representing the speed, and a memory for storing a plurality of measured torques and corresponding speeds during the initiating sequence. Further, the inventive load monitor comprises means for repeatedly, during normal operation, comparing an input signal representing the torque with a load limit value valid for a speed given by the input signal representing the speed, and means for providing a load limit value, the load limit value being a function of the plurality of torques and speeds stored in the memory and a predetermined deviation value.

According to another embodiment, the load monitor further comprises means for generating an action signal when the load, given by said input signal representing the torque generated by the motor, is out of a range defined by at least said load limit value.

In another embodiment of the invention, said load monitor is included in a frequency converter, the frequency converter being arranged to drive a motor. This is advantageous in that the motor torque and speed parameters to be measured and registered, respectively, are easily accessible inside the frequency converter as the speed may be calculated from the present frequency of the frequency converter and the torque usually may be calculated from information provided by the frequency converter. For instance, the supply voltage and the supply current to the motor may be used to calculate the torque. The supply current to the motor is preferably measured. The supply voltage may be measured or may be calculated based on control signals in the frequency converter combined with a DC-voltage of a rectifier circuit of the frequency converter.

A further scope of applicability of the present invention will become apparent from the detailed description given below. However, it should be understood that the detailed description and specific examples, while indicating preferred embodiments of the invention, are given by way of illustration only, since various changes and modifications within the spirit and scope of the invention will become apparent to those skilled in the art from this detailed description.

### Brief Description of the Drawings

Other features and advantages of the present invention will become apparent from the following detailed description of presently preferred embodiments, with reference to the accompanying drawings, in which
Fig. 1 is a schematic block diagram of a first embodiment of a frequency converter including a load monitor according to the invention, the frequency converter being connected to a motor;
Fig. 2 is a schematic block diagram of a second embodiment of a load monitor according to the invention, the load monitor being connected to a motor and possibly a frequency converter;
Fig. 3 is a flow diagram of the initiating sequence in an embodiment of a load monitor;
Fig. 4 is a flow diagram illustrating the function of an embodiment of a load monitor according to the invention during normal operation; and
Fig. 5 is a graph of torque versus speed illustrating collected values of torque at different speeds and corresponding load limit value curves.

### Detailed Description of Embodiments

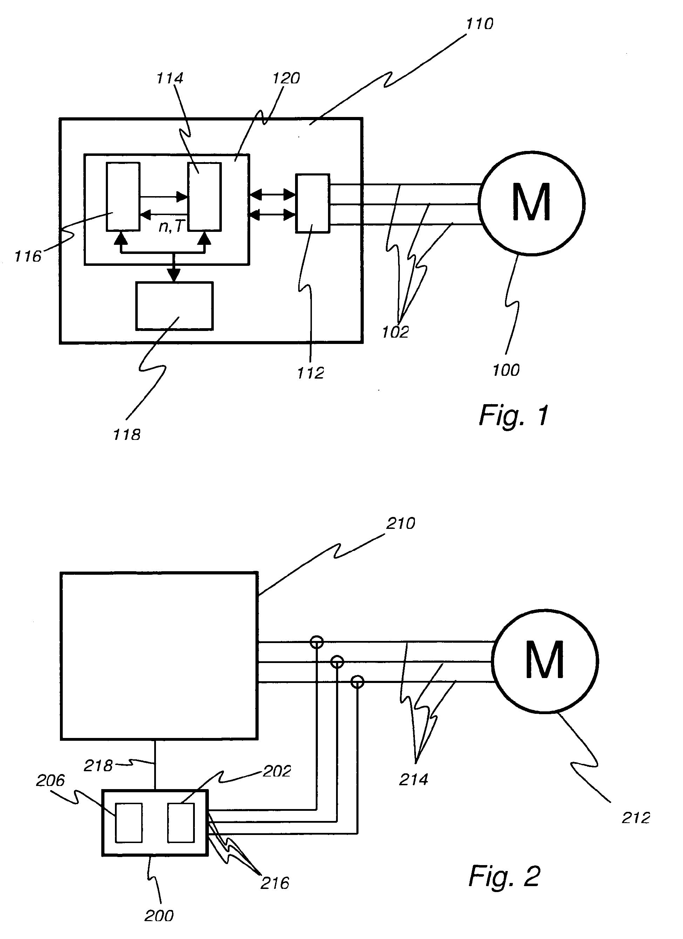

In Fig 1 an electric motor 100 receiving its power supply 102 from a frequency converter 110 is shown. The frequency converter 110 is arranged to vary the speed of the electrical motor 100 by controlling the voltage and/or the current by means of power electronics 112 in the frequency converter 110. The control of the power electronics is performed by means of a controller 114.

According to one embodiment of the invention a load monitor 116 is arranged in the frequency converter 110. The information needed by the load monitor may then be provided directly by the frequency converter 110 or the controller 114 of the frequency converter 110. The information may be represented by data transferred over a data bus or at least a signal carrying the information over a signal line. The information provided to the load monitor may be information representing the present torque T of the motor and information representing the present speed n of the motor.

According to one embodiment the present torque and speed of the motor may be calculated from the present current and the present voltage, such implementations are known by the person skilled in the art. In a further embodiment the speed of the motor may alternatively be given by the desired value of the speed provided to the controller.

The load monitor 116 may be connected to a memory 118 for storing data related to the function of the load monitor 116, the data to be stored will be discussed below.

Further, the load monitor 116 may be connected to the controller in order to send signals to the controller, these signals may be arranged to halt the motor or instruct the frequency converter 110 to perform other actions in response to a warning or alarm originating from the load monitor 116. The load monitor may also be arrange to provide such alarm signals and/or other data relating to the operation of the load monitor to an external interface, e.g. a network connection, a data bus, separate signal lines, etc.

According to one embodiment the controller 114 and the load monitor 116 are program modules executing in a processor 120, e.g. a micro processor, a cpu, or any other processing device capable of executing program modules. In such embodiment the memory 118 may be the memory used by the processor and, thus, both the load monitor 116 and the controller 114 may use the same memory.

In Fig 2, another embodiment is shown. In this embodiment the load monitor 200 is arranged external to a frequency converter 210. The frequency converter being arranged to provide the electrical motor 212 with power, via power supplies 214, and to control the speed of the motor by controlling characteristics of the power to the electrical motor 212. The frequency converter 210 may be a frequency converter similar to the frequency converter of Fig. 1. The general functionality of a frequency converter is known to the skilled person.

The load monitor 200 includes a processor 202 and a memory 206 arranged to collect and analyze received information in order to monitor the load of the electrical motor 212, the functionality will be described in more detail below.

Input of information to the load monitor 200 may be arranged in a couple of ways. For instance the load monitor may include inputs 216 arranged to be connected to signal lines carrying signals from volt measuring means and or current measuring means arranged at the power supplies 214 between the motor and the frequency converter. In such an embodiment the line 218 between the load monitor may be arranged to provide the frequency converter with any one or any combination of alarm signals, halt instructions, instructions regarding performing some specified action, and other data.

According to another embodiment the signals to the inputs 216 may originate from the frequency converter. In such case there is no need to install separate measuring equipment.

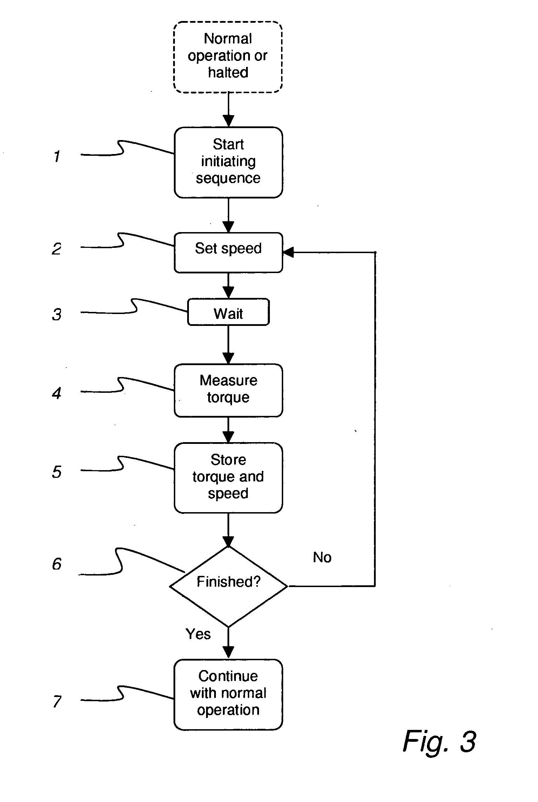

Now, with reference to Figs 3, 4 and 5, the function of an embodiment of a load monitor, e.g. load monitor 116 or 200, according to the invention will be described.

Fig. 3 shows the initiating sequence in an embodiment of a load monitor according to the invention. In the following, when different parts of the inventive load monitor or other parts of a motor system in which the load monitor is implemented are mentioned, references are made to the embodiment shown in Fig. 1 as an illustrative example.

The initiating sequence for the load monitor 116,200 preferably is started when the motor and the system has reached a state of "normal operation", i.e. when the system and the motor has been checked and found to work properly. Such a state may be determined manually or by means of some automation. However, in order to facilitate installation of the load monitor in a plurality of diverse systems said state may advantageously be determined manually.

During the initiating sequence, the motor 100, 212 is run at a range of different speeds and the present torque at each speed is measured and stored together with the corresponding registered speed. By automatically collecting a plurality of torques and corresponding speeds in this way, a substantially correct load limit value at each speed may be calculated based on a true normal torque/load of the motor 100, 212 even though the load varies with speed.

Referring now to Fig. 3 in more detail, the initiating sequence for the load monitor 116, 200 is entered in step 1. In step 2, the automatic collection of torques and speeds starts by the setting of a first speed for the motor 100,212. When the first speed is set, the load monitor 116, 200 waits in step 3 until an equilibrium state of the motor torque at the first speed is reached. Then, in step 4, the torque of the motor 100, 212 is measured at the first speed. The measured torque and the registered first speed are then in step 5 stored together in the memory 118, 206 of the load monitor 116, 200.

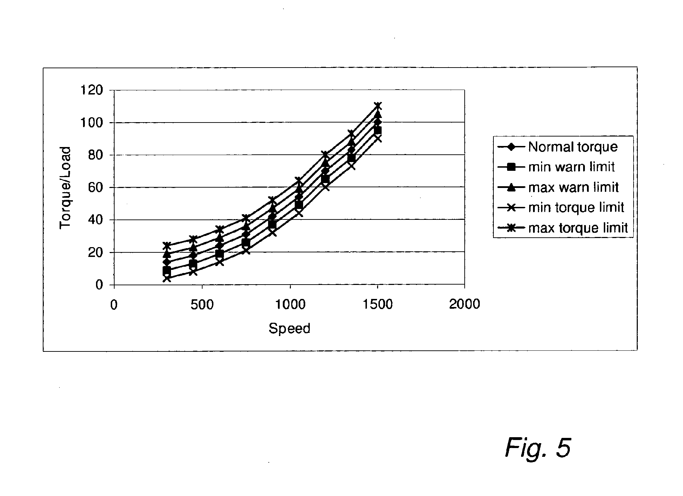

An operator of the motor system may choose at which speeds the torque should be measured by setting a range of speeds before or in connection with an initiating sequence, e.g. the one described in connection with Fig. 3, is started. The setting of the range may be performed by setting each speed value individually or by setting the speed range and the frequency of the speeds or the number of speeds within the range. For example, the operator may choose to store nine pairs of corresponding torques and speed evenly distributed in a range of speeds from 300 rpm to 1500 rpm as illustrated in Fig. 5.

If the application is such that the motor 100, 212 shall only run at one single speed, in which case prior art solutions would work just as well as the present invention, the initiating sequence will be finished after that one pair of corresponding torque and speed is stored, and hence the initiating sequence will end without looping and shift directly from step 6 to step 7 in which normal operation of the motor system starts.

If two or more pairs of corresponding torques and speeds shall be stored, the initiating sequence jumps back from step 6 to step 2 and repeats steps 2 to 6 until the torque and corresponding speed has been stored for each speed that the operator has selected. Then, the process is shifted to normal operation of the motor system, step 7.

Hence, after the initiating sequence, a range of torques and corresponding speeds are stored in the memory 118, 206 of the load monitor 116, 200. If for some reason the operator would like to change any of the stored torque values at different speeds, the implementation could be such that the stored values of normal torque may be changed manually.

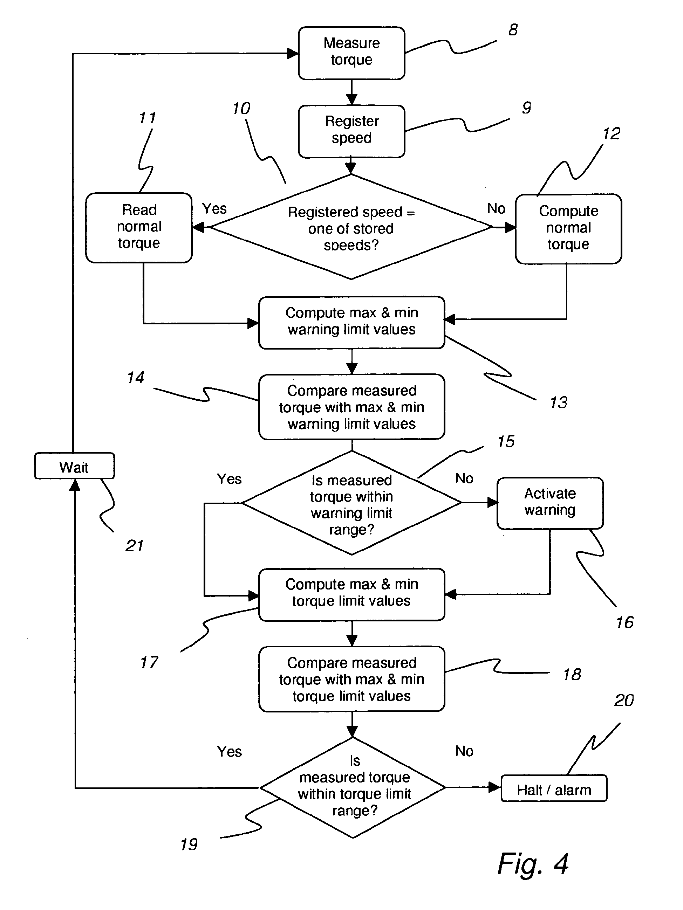

Reference is now made to Fig. 4, in which the function of an embodiment of a load monitor according to the invention during normal operation is illustrated. Reference is still made to Fig. 1 when different parts of the motor system are mentioned.

During the normal operation, the present torque of the motor 100, 212, i.e. the load the motor is exposed to, at the present speed is monitored. This present torque is related to the torques and corresponding speeds stored during the initiating sequence in order to decide whether or not the present torque at the present speed is within an acceptable torque range.

In step 8 the present torque is measured. The present speed is registered in step 9. In step 10, it is decided whether the registered speed corresponds to any one of the speeds stored in the memory 118, 206 during the initiating sequence.

If the registered speed corresponds to a stored speed, the "normal" torque which is stored together with the stored speed is read from the memory 118, 206 in step 11.

If the registered speed does not correspond to a stored speed, the normal torque is in step 12 calculated from stored torque values at stored speeds which are higher and lower than the present speed. This is preferably made by means of some kind of interpolation method known to a person skilled in the art. A simpler alternative to using interpolation is to select from the memory a "normal" torque value corresponding to a torque value relating to a stored speed close to the registered speed. Other methods of approximating the "normal" torque is known by the person skilled in the art.

In step 13, maximum and minimum warning limit values are computed from the determined normal torque value. The warning limit values define load limits at which a warning to the operator or another part of the motor system is to be generated. These warning limits are used in addition to those limit values which herein are called load limit values and which define the load limits at which an alarm is to be generated and/or the motor system is halted. Hence, the warning limits are closer to the normal torque than the load limits, see Fig 5.

The warning limit values are calculated as a function of the normal torque value at a specific speed, which as seen above in turn is a function of the plurality of torques and speeds stored in the memory 118, 206, and a predetermined warning deviation value. This warning deviation value is pre-set and may be manually changed by the operator. The warning limit value may either be calculated by adding the warning deviation value in the form of e.g. a preset torque value to the normal torque value or by multiplying the warning limit value with the warning deviation value in the form of a factor such as a percentage value.

When the maximum and minimum warning limit values are determined in step 13, the measured torque is compared with the warning limit values in step 14. In step 15, it is determined whether the measured torque is within the warning limit range defined by the maximum and minimum warning limit values. If the measured torque is within the range between the warning limits, the load monitor process proceed to the next step 17 and computes maximum and minimum load limit values. If the measured torque is not within the range between the warning limits, a warning e.g. to the operator is activated in step 16 and then the process proceed to step 17.

In step 17, the maximum and minimum load limit values are calculated in a similar way as the warning limit values, i.e. by taking the determined normal torque at the registered speed and either adding a torque deviation value to it or multiplying it with a torque a torque deviation value. The torque deviation value is also pre-set and may be manually changed by the operator.

Then, when the maximum and minimum load limit values are determined in step 17, the measured torque is compared with the load limit values in step 18. In step 19, it is determined whether the measured torque is within the load limit range defined by the maximum and minimum load limit values. If the measured torque is not within the load limit range, an alarm is generated and/or the motor process is stopped in step 20. If the measured torque is within the load limit range, the load monitor process goes to step 21 and waits a predetermined period of time before it jumps back to step 8 again for a new monitoring loop.

In Fig. 5, torque/load versus speed is illustrated for nine collected values of normal torque at speeds in a range from 300 rpm to 1500 rpm. Further, the corresponding maximum and minimum warning limit values and maximum and minimum load limit values are shown. In this example, the warning limit values are calculated by adding the values of ±5 to the normal torque, and the load limit values are calculated by adding the values of ±10 to the normal torque.

As in the above described embodiment of the invention, the warning and load limits may be calculated at each measurement loop of the load monitor during normal operation. This is advantageous since there is no need to store all the limit values for all possible speeds which the motor may adopt during normal operation. However, in an another embodiment in accordance with the invention all the possible limit values may be computed and stored during the initiating sequence before the normal operation.

In the above exemplary embodiment, both maximum and minimum warning/load limit values are calculated. Alternatively, only a maximum torque/warning limit value could be calculated, wherein the acceptable torque range of operation is defined by the maximum load limit value and zero torque.

In the above described embodiment, both load limit values and warning limit values are used. Alternatively, only load limit values could be used.

## Claims

1. A method for monitoring the load of a motor, comprising the acts of:
repeatedly measuring (8) the torque and registering (9) the speed during normal operation,
determining (11, 12, 13), in connection with each measurement of the torque during normal operation, a load limit value valid for the registered speed, the load limit value being a function of a plurality of stored torques and speeds and a predetermined deviation value,
comparing (14), in connection with each measurement of the torque during normal operation, the measured torque with the determined load limit value, and
generating (16) an action signal if the measured torque is not within an acceptable range limited by the determined load limit value.

2. A method according to claim 1, further comprising the act of:
automatically collecting (2, 4, 5) said plurality of stored torques and speeds during an initiating sequence before said normal operation.

3. A method according to claim 2, wherein said act of automatically collecting comprises the acts of:
setting (2) a first speed for the motor,
measuring (4), after the act of setting a first speed, a torque of the motor,
storing (5) the measured torque and the value of the corresponding speed in a memory,
setting (2) a second speed for the motor after storing the previously measured torque and the value of the corresponding speed, and
repeating the acts of measuring (4) and storing (5) for the new speed.

4. A method according to claim 3, further comprising, between said act of setting during the initiating sequence a first speed for the motor and said act of measuring a torque of the motor, the act of
waiting (3) until an equilibrium state of the motor torque at said first speed is reached.

5. A method according to any one of the preceding claims, wherein said act of determining comprises the act of computing (13), in connection with each measurement of the torque during normal operation, the load limit value as the function of a plurality of stored torques and speeds and a predetermined deviation value.

6. A method according to claim 5, wherein said act of computing further includes the act of interpolating (12) between said stored torques and speeds in order to provide the load limit value at the registered speed if the registered speed does not correspond to any one of the stored speeds.

7. A method according to any one of claims 1 to 4, further comprising the acts of:
computing a plurality of load limit values as functions of said plurality of stored torques and speeds and the predetermined deviation value during an initiating sequence before said normal operation, and
storing the computed load limit values during said initiating sequence.

8. A method according to claim 7, wherein said act of computing further includes the act of interpolating between said stored torques and speeds in order to provide further load limit values in the case the registered speed will not correspond to any one of the stored speeds.

9. A method according to any one of the preceding claims,
wherein said act of determining (11, 12, 13) a load limit value includes both the act of determining a maximum load limit value and the act of determining a minimum load limit value for each relevant speed,
wherein said act of comparing includes both the act of comparing the measured torque with the determined maximum load limit value and the act of comparing the measured torque with the determined minimum load limit value, and
wherein said acceptable range is between and limited by the maximum load limit value and the minimum load limit value.

10. A method according to any one of the preceding claims,
wherein said act of determining includes both the act of determining said load limit value and the act of determining a warning limit value being a function of said plurality of stored torques and speeds and a predetermined warning deviation value which is smaller than said deviation value for said load limit value, and
wherein said act of comparing includes both the act of comparing (14) the measured torque with the determined load limit value and the act of comparing (18) the measured torque with the determined warning limit value.

11. A method according to any one of the preceding claims, wherein said predetermined deviation value is in the form that it yields said load limit value when multiplied by a function of said plurality of stored torques and speeds.

12. A method according to any one of claims 1-10,
wherein said predetermined deviation value is in the form that it yields said load limit value when added to a function of said plurality of stored torques and speeds.

13. A method for initiating monitoring and for monitoring the load of a motor, comprising the acts of:
entering initiating sequence,
setting (2), during the initiating sequence, a first speed for the motor,
measuring (4), after the act of setting a first speed, a torque of the motor,
storing (5) the measured torque and the value of the corresponding speed in a memory,
setting (2) a second speed for the motor after storing the previously measured torque and the value of the corresponding speed,
repeating the acts of measuring (4) and storing (5) for the new speed,
shifting (7) to normal operation when initiating sequence is completed, and
monitoring a present torque of the motor at a present speed during the normal operation and relating the present torque to the torques and corresponding speeds stored during the initiating sequence in order to decide whether or not the present torque at the present speed is within an acceptable torque range.

14. A method according to claim 13, wherein said act of monitoring further comprises the acts of:
repeatedly measuring the torque and registering the speed during normal operation,
determining, in connection with each measurement of the torque during normal operation, a load limit value valid for the registered speed, the load limit value being a function of the torques and speeds stored during the initiating sequence and a predetermined deviation value,
comparing, in connection with each measurement of the torque during normal operation, the measured torque with the determined load limit value,
if the measured torque, during normal operation, is not within an acceptable range limited by the determined load limit value then an action signal is generated.

15. A load monitor for monitoring the load of a motor, comprising
a Central Processing Unit (CPU),
means for automatically and repeatedly generating a signal for changing the speed of the motor during an initiating sequence,
an input for a signal representing the torque,
an input for a signal representing the speed,
a memory for storing a plurality of measured torques and corresponding speeds during the initiating sequence,
means for repeatedly, during normal operation, comparing an input signal representing the torque with a load limit value valid for a speed given by the input signal representing the speed, and
means for providing a load limit value, the load limit value being a function of the plurality of torques and speeds stored in the memory and a predetermined deviation value.

16. A load monitor according to claim 15, further comprising means for generating an action signal when the torque, given by said input signal representing the torque, is out of a range defined by at least said load limit value.

17. A load monitor according to claim 15 or 16, further comprising means for performing the acts of any one of claims 3 to 12.

18. A load monitor according to any one of claims 15 to 17, wherein said load monitor is included in a frequency converter for driving a motor.

19. A frequency converter for driving a motor, said converter comprising a load monitor according to any one of claims 15 to 17.

## Patentansprüche

1. Verfahren zum Überwachen der Last eines Motors, das folgende Schritte umfasst:
wiederholtes Messen (8) des Drehmoments und Registrieren (9) der Drehzahl während des normalen Betriebes,
Bestimmen (11, 12, 13), in Verbindung mit jeder Messung des Drehmoments während des normalen Betriebes, eines Lastgrenzwertes, der für die registrierte Drehzahl gültig ist, wobei der Lastgrenzwert eine Funktion mehrerer gespeicherter Drehmomente und Drehzahlen und eines vorgegebenen Abweichungswertes ist,
Vergleichen (14), in Verbindung mit jeder Messung des Drehmoments während des normalen Betriebes, des gemessenen Drehmoments mit dem bestimmten Lastgrenzwert, und
Erzeugen (16) eines Aktionssignals, wenn das gemessene Drehmoment nicht innerhalb eines akzeptablen Bereichs liegt, der durch den bestimmten Lastgrenzwert begrenzt wird.

2. Verfahren nach Anspruch 1, das des Weiteren folgenden Schritt umfasst:
automatisches Erfassen (2, 4, 5) der mehreren gespeicherten Drehmomente und Drehzahlen während einer Initiierungssequenz vor dem normalen Betrieb.

3. Verfahren nach Anspruch 2, wobei der Schritt des automatischen Erfassens folgende Schritte umfasst:
Einstellen (2) einer ersten Drehzahl für den Motor,
Messen (4), nach dem Schritt des Einstellens einer ersten Drehzahl, eines Drehmoments des Motors,
Speichern (5) des gemessenen Drehmoments und des Wertes der entsprechenden Drehzahl in einem Speicher,
Einstellen (2) einer zweiten Drehzahl für den Motor nach dem Speichern des zuvor gemessenen Drehmoments und des Wertes der entsprechenden Drehzahl, und
Wiederholen der Schritte des Messens (4) und Speicherns (5) für die neue Drehzahl.

4. Verfahren nach Anspruch 3, das des Weiteren zwischen dem Schritt des Einstellens einer ersten Drehzahl für den Motor während der Initiierungssequenz und dem Schritt des Messens eines Drehmoments des Motors folgenden Schritt umfasst:
Warten (3), bis ein Gleichgewichtszustand des Motordrehmoments bei der ersten Drehzahl erreicht ist.

5. Verfahren nach einem der vorangehenden Ansprüche, wobei der Schritt des Bestimmens folgenden Schritt umfasst: Berechnen (13), in Verbindung mit jeder Messung des Drehmoments während des normalen Betriebes, des Lastgrenzwertes als die Funktion mehrerer gespeicherter Drehmomente und Drehzahlen und eines vorgegebenen Abweichungswertes.

6. Verfahren nach Anspruch 5, wobei der Schritt des Berechnens des Weiteren folgenden Schritt enthält:
Interpolieren (12) zwischen den gespeicherten Drehmomenten und Drehzahlen, um den Lastgrenzwert bei der registrierten Drehzahl bereitzustellen, wenn die registrierte Drehzahl keiner der gespeicherten Drehzahlen entspricht.

7. Verfahren nach einem der Ansprüche 1 bis 4, das des Weiteren folgende Schritte umfasst:
Berechnen mehrerer Lastgrenzwerte als Funktionen der mehreren gespeicherten Drehmomente und Drehzahlen und des vorgegebenen Abweichungswertes während einer Initiierungssequenz vor dem normalen Betrieb, und
Speichern der berechneten Lastgrenzwerte während der Initiierungssequenz.

8. Verfahren nach Anspruch 7, wobei der Schritt des Berechnens des Weiteren folgenden Schritt enthält:
Interpolieren zwischen den gespeicherten Drehmomenten und Drehzahlen, um weitere Lastgrenzwerte in dem Fall bereitzustellen, dass die registrierte Drehzahl keiner der gespeicherten Drehzahlen entspricht.

9. Verfahren nach einem der vorangehenden Ansprüche,
wobei der Schritt des Bestimmens (11, 12, 13) eines Lastgrenzwertes sowohl den Schritt des Bestimmens eines größten Lastgrenzwertes als auch den Schritt des Bestimmens eines kleinsten Lastgrenzwertes für jede relevante Drehzahl enthält,
wobei der Schritt des Vergleichens sowohl den Schritt des Vergleichens des gemessenen Drehmoments mit dem bestimmten größten Lastgrenzwert als auch den Schritt des Vergleichens des gemessenen Drehmoments mit dem bestimmten kleinsten Lastgrenzwert enthält, und
wobei der akzeptable Bereich zwischen dem größten Lastgrenzwert und dem kleinsten Lastgrenzwert liegt und durch diese beiden Lastgrenzwerte begrenzt wird.

10. Verfahren nach einem der vorangehenden Ansprüche,
wobei der Schritt des Bestimmens sowohl den Schritt des Bestimmens des Lastgrenzwertes als auch den Schritt des Bestimmens eines Warngrenzwertes enthält, der eine Funktion der mehreren gespeicherten Drehmomente und Drehzahlen und eines vorgegebenen Warnabweichungswertes ist, der kleiner als der Abweichungswert für den Lastgrenzwert ist, und
wobei der Schritt des Vergleichen sowohl den Schritt des Vergleichens (14) des gemessenen Drehmoments mit dem bestimmten Lastgrenzwert als auch den Schritt des Vergleichens (18) des gemessenen Drehmoments mit dem bestimmten Warngrenzwert enthält.

11. Verfahren nach einem der vorangehenden Ansprüche, wobei der vorgegebene Abweichungswert die Form aufweist, dass er den Lastgrenzwert ergibt, wenn er mit einer Funktion der mehreren gespeicherten Drehmomente und Drehzahlen multipliziert wird.

12. Verfahren nach einem der Ansprüche 1-10, wobei der vorgegebene Abweichungswert die Form aufweist, dass er den Lastgrenzwert ergibt, wenn er zu einer Funktion der mehreren gespeicherten Drehmomente und Drehzahlen addiert wird.

13. Verfahren zum Initiieren des Überwachens und zum Überwachen der Last eines Motors, das folgende Schritte umfasst:
Eintreten in eine Initiierungssequenz,
Einstellen (2), während der Initiierungssequenz, einer ersten Drehzahl für den Motor,
Messen (4), nach dem Schritt des Einstellens einer ersten Drehzahl, eines Drehmoments des Motors,
Speichern (5) des gemessenen Drehmoments und des Wertes der entsprechenden Drehzahl in einem Speicher,
Einstellen (2) einer zweiten Drehzahl für den Motor nach dem Speichern des zuvor gemessenen Drehmoments und des Wertes der entsprechenden Drehzahl,
Wiederholen der Schritte des Messens (4) und Speicherns (5) für die neue Drehzahl,
Wechseln (7) zum normalen Betrieb, wenn die Initiierungssequenz vollendet ist, und
Überwachen eines momentanen Drehmoments des Motors bei einer momentanen Drehzahl während des normalen Betriebes und Inbeziehungsetzen des momentanen Drehmoments zu den Drehmomenten und entsprechenden Drehzahlen, die während der Initiierungssequenz gespeichert wurden, um zu entscheiden, ob das momentane Drehmoment bei der momentanen Drehzahl innerhalb eines akzeptablen Drehmomentbereichs liegt oder nicht.

14. Verfahren nach Anspruch 13, wobei der Schritt des Überwachens des Weiteren folgende Schritte umfasst:
wiederholtes Messen des Drehmoments und Registrieren der Drehzahl während des normalen Betriebes,
Bestimmen, in Verbindung mit jeder Messung des Drehmoments während des normalen Betriebes, eines Lastgrenzwertes, der für die registrierte Drehzahl gültig ist, wobei der Lastgrenzwert eine Funktion der Drehmomente und Drehzahlen, die während der Initiierungssequenz gespeichert wurden, und eines vorgegebenen Abweichungswertes ist,
Vergleichen, in Verbindung mit jeder Messung des Drehmoments während des normalen Betriebes, des gemessenen Drehmoments mit dem bestimmten Lastgrenzwert,
wenn das gemessene Drehmoment, während des normalen Betriebes, nicht innerhalb eines akzeptablen Bereichs liegt, der durch den bestimmten Lastgrenzwert begrenzt ist, so wird ein Aktionssignal erzeugt.

15. Lastüberwachungsvorrichtung zum Überwachen der Last eines Motors, die Folgendes umfasst:
eine zentrale Verarbeitungseinheit (CPU),
Mittel zum automatischen und wiederholten Erzeugen eines Signals zum Ändern der Drehzahl des Motors während einer Initiierungssequenz,
einen Eingang für ein Signal, welches das Drehmoment darstellt,
einen Eingang für ein Signal, welches die Drehzahl darstellt,
einen Speicher zum Speichern mehrerer gemessener Drehmomente und entsprechender Drehzahlen während der Initiierungssequenz,
Mittel zum wiederholten Vergleichen, während des normalen Betriebes, eines Eingangssignals, welches das Drehmoment darstellt, mit einem Lastgrenzwert, der für eine Drehzahl gültig ist, die durch das Eingangssignal gegeben ist, welches die Drehzahl darstellt, und
Mittel zum Erzeugen eines Lastgrenzwertes, wobei der Lastgrenzwert eine Funktion der mehreren Drehmomente und Drehzahlen, die in dem Speicher gespeichert sind, und eines vorgegebenen Abweichungswertes ist.

16. Lastüberwachungsvorrichtung nach Anspruch 15, die des Weiteren Mittel umfasst, um ein Aktionssignal zu erzeugen, wenn das Drehmoment, das durch das Eingangssignal gegeben ist, welches das Drehmoment darstellt, außerhalb eines Bereichs liegt, der durch mindestens den Lastgrenzwert definiert ist.

17. Lastüberwachungsvorrichtung nach Anspruch 15 oder 16, die des Weiteren Mittel umfasst, um die Schritte nach einem der Ansprüche 3 bis 12 auszuführen.

18. Lastüberwachungsvorrichtung nach einem der Ansprüche 15 bis 17, wobei die Lastüberwachungsvorrichtung in einem Frequenzwandler zum Antreiben eines Motors enthalten ist.

19. Frequenzwandler zum Antreiben eines Motors, wobei der Wandler eine Lastüberwachungsvorrichtung nach einem der Ansprüche 15 bis 17 umfasst.

## Revendications

1. Procédé de contrôle de la charge d'un moteur, comprenant les étapes consistant à :
mesurer répétitivement (8) le couple et enregistrer (9) la vitesse pendant un fonctionnement normal,
déterminer (11,12,13), en liaison avec chaque mesure du couple pendant un fonctionnement normal, une valeur limite de charge valide pour la vitesse enregistrée, la valeur limite de charge étant une fonction d'une pluralité de couples et vitesses mémorisés et d'une valeur d'écart prédéterminée,
comparer (14), en liaison avec chaque mesure du couple pendant un fonctionnement normal, le couple mesuré avec la valeur limite de charge déterminée, et
générer (16) un signal d'action si le couple mesuré n'est pas compris dans une plage acceptable limitée par la valeur limite de charge déterminée.

2. Procédé selon la revendication 1, comprenant en outre l'action consistant à :
collecter automatiquement (2,4,5) ladite pluralité de couples et vitesses mémorisés pendant une séquence d'amorce avant ledit fonctionnement normal.

3. Procédé selon la revendication 2, dans lequel ladite action de collecte automatique comprend les actions consistant à :
régler (2) une première vitesse pour le moteur,
mesurer (4), après le réglage d'une première vitesse, un couple du moteur,
mémoriser (5) le couple mesuré et la valeur de la vitesse correspondante dans une mémoire,
régler (2) une seconde vitesse pour le moteur après la mémorisation du couple mesuré et de la valeur de la vitesse correspondante, et
répéter les actions de mesure (4) et mémorisation (5) pour la nouvelle vitesse.

4. Procédé selon la revendication 3, comprenant en outre, entre ladite action de réglage pendant la séquence d'amorce d'une première vitesse pour le moteur et ladite action de mesure d'un couple du moteur, l'action consistant à :
attendre (3) jusqu'à ce qu'un état d'équilibre du couple de moteur à ladite première vitesse soit atteint.

5. Procédé selon une quelconque des revendications précédentes, dans lequel ladite action de détermination comprend l'action de calcul informatisé (13), en liaison avec chaque mesure du couple pendant un fonctionnement normal, de la valeur limite de charge comme fonction d'une pluralité de couples et vitesses mémorisés et d'une valeur d'écart prédéterminée.

6. Procédé selon la revendication 5, dans lequel ladite action de calcul informatisé inclut en outre l'action d'interpolation (12) entre lesdits couples et vitesses mémorisés de manière à fournir la valeur limite de charge à la vitesse enregistrée si la vitesse enregistrée ne correspond pas à une quelconque des vitesses mémorisées.

7. Procédé selon une quelconque des revendications 1 à 4, comprenant en outre les actions consistant à :
calculer de manière informatisée des valeurs limites de charge comme des fonctions de ladite pluralité de couples et vitesses mémorisés et de la valeur d'écart prédéterminée pendant une séquence d'amorce avant ledit fonctionnement normal, et
mémoriser les valeurs limites de charge calculées de manière informatisée pendant ladite séquence d'amorce.

8. Procédé selon la revendication 7, dans lequel ladite action de calcul informatisé inclut en outre l'action d'interpolation entre lesdits couples et vitesses mémorisés de manière à fournir des valeurs limites de charge supplémentaires au cas où la vitesse enregistrée ne correspondrait pas à une quelconque des vitesses mémorisées.

9. Procédé selon une quelconque des revendications précédentes,
dans lequel ladite action de détermination (11,12,13) d'une valeur limite de charge inclut à la fois l'action de détermination d'une valeur limite de charge maximale et l'action de détermination d'une valeur limite de charge minimale pour chaque vitesse significative,
dans lequel ladite action de comparaison inclut à la fois l'action de comparaison du couple mesuré avec la valeur limite de charge maximale déterminée et l'action de comparaison du couple mesuré avec la valeur limite de charge minimale déterminée, et
dans lequel ladite plage acceptable est comprise entre et limitée par la valeur limite de charge maximale et la valeur limite de charge minimale.

10. Procédé selon une quelconque des revendications précédents,
dans lequel ladite action de détermination inclut à la fois l'action de détermination de ladite valeur limite de charge et l'action de détermination d'une valeur limite d'alerte étant une fonction de ladite pluralité de couples et vitesses mémorisés et d'une valeur d'écart d'alerte prédéterminée qui est plus petite que ladite valeur d'écart pour ladite valeur limite de charge, et
dans lequel ladite action de comparaison inclut à la fois l'action de comparaison (14) du couple mesuré avec la valeur limite de charge déterminée et l'action de comparaison (18) du couple mesuré avec la valeur limite d'alerte déterminée.

11. Procédé selon une quelconque des revendications précédentes, dans lequel ladite valeur d'écart prédéterminée est telle qu'elle donne ladite valeur limite de charge quand elle est multipliée par une fonction de ladite pluralité de couples et vitesses mémorisés.

12. Procédé selon une quelconque des revendications 1 à 10, dans lequel ladite valeur d'écart prédéterminée est telle qu'elle donne ladite valeur limite de charge quand elle est additionnée à une fonction de ladite pluralité de couples et vitesses mémorisés.

13. Procédé d'amorce du contrôle et de contrôle de la charge d'un moteur, comprenant les actions consistant à :
démarrer la séquence d'amorce,
régler (2), pendant la séquence d'amorce, une première vitesse pour le moteur,
mesurer (4), après l'action de réglage d'une première vitesse, un couple du moteur,
mémoriser (5) le couple mesuré et la valeur de la vitesse correspondante dans une mémoire,
régler (2) une seconde vitesse pour le moteur après la mémorisation du couple précédemment mesuré et de la valeur de la vitesse correspondante,
répéter les actions de mesure (4) et de mémorisation (5) pour la nouvelle vitesse,
passer (7) à une fonctionnement normal quand la séquence d'amorce prend fin, et
contrôler un couple actuel du moteur à une vitesse actuelle pendant le fonctionnement normal et rapporter le couple actuel aux couples et vitesses correspondants mémorisés pendant la séquence d'amorce de manière à décider si ou non le couple actuel à la vitesse actuelle est compris dans une plage de couple acceptable.

14. Procédé selon la revendication 13, dans lequel ladite action de contrôle comprend en outre les actions consistant à :
mesurer répétitivement le couple et enregistrer la vitesse pendant un fonctionnement normal,
déterminer, en liaison avec chaque mesure du couple pendant un fonctionnement normal, une valeur limite de charge valide pour la vitesse enregistrée, la valeur limite de charge étant une fonction des couples et vitesses mémorisés pendant la séquence d'amorce et d'une valeur d'écart prédéterminée,
comparer, en liaison avec chaque mesure du couple pendant un fonctionnement normal, le couple mesuré avec la valeur limite de charge déterminée,
si le couple mesuré, pendant un fonctionnement normal, n'est pas compris dans une plage acceptable limitée par la valeur limite de charge déterminée, alors un signal d'action est généré.

15. Moniteur de charge pour contrôler la charge d'un moteur, comprenant :
une unité centrale (CPU),
des moyens pour générer automatiquement et répétitivement un signal pour modifier la vitesse du moteur pendant une séquence d'amorce,
une entrée d'un signal représentant le couple,
une entrée d'un signal représentant la vitesse,
une mémoire pour mémoriser une pluralité de couples mesurés et des vitesses correspondantes pendant la séquence d'amorce,
des moyens pour comparer répétitivement, pendant un fonctionnement normal, un signal d'entrée représentant le couple avec une valeur limite de charge valide pour une vitesse données par le signal d'entrée représentant la vitesse, et
des moyens pour fournir une valeur limite de charge, la valeur limite de charge étant une fonction de la pluralité de couples et vitesses mémorisés dans la mémoire et d'une valeur d'écart prédéterminée.

16. Moniteur de charge selon la revendication 15, comprenant en outre des moyens pour générer un signal d'action quand le couple, donné par ledit signal d'entrée représentant le couple, est en dehors d'une plage définie par au moins ladite valeur limite de charge.

17. Moniteur de charge selon la revendication 15 ou 16, comprenant en outre des moyens pour exécuter les actions d'une quelconque des revendications 3 à 12.

18. Moniteur de charge selon une quelconque des revendications 15 à 17, dans lequel ledit moniteur de charge est inclus dans un convertisseur de fréquence pour entraîner un moteur.

19. Convertisseur de fréquence pour entraîner un moteur, ledit convertisseur comprenant un moniteur de charge selon une quelconque des revendications 15 à 17.
